# EUROPÄISCHE PATENTSCHRIFT

(11) **EP 1 700 551 B1**
(45) Veröffentlichungstag und Bekanntmachung des Hinweises auf die Patenterteilung: **18.11.2009**
(21) Anmeldenummer: 06110660.5
(22) Anmeldetag: 03.03.2006
(51) Int. Cl.: A47J 47/10, B65D 51/16, B65D 81/20

(54) **Frischhaltebehälter mit einem Be- und Entlüftungsventil**
Keep-fresh container with a venting and de-aeration valve
Récipient préservant la fraîcheur avec une soupape d'équilibrage et désaération

(30) Priorität: 11.03.2005 DE 202005004130 U
(43) Veröffentlichungstag der Anmeldung: 13.09.2006
(73) Patentinhaber: Cofresco Frischhalteprodukte GmbH & Co. KG, 32427 Minden (DE)
(72) Erfinder: ARNING, Hans-Jürgen, 32312, Lübbecke (DE); LORMAIN, André, 75009, Paris (FR)
(74) Vertreter: Dantz, Jan Henning

(56) Entgegenhaltungen:
- US-A- 6 035 769
- US-A1- 2004 178 202
- US-B1- 6 557 462

## Beschreibung

Die vorliegende Erfindung betrifft einen Frischhaltebehälter mit einem Unterteil und mit einem Deckel, der mittels zweier Griffe und einer umlaufenden Dichtung, welche auf dem oberen Rand des Unterteiles aufliegt, abdichtend mit dem Unterteil verbindbar ist, wobei der Deckel mit einem Be- und Entlüftungsventil versehen ist, welches durch eine Dichtkappe verschließbar ist.

Frischhaltebehälter der vorerwähnten Art sind an sich bekannt und bieten die Möglichkeit, insbesondere Lebensmittel dadurch besonders lange frisch halten zu können, dass innerhalb des Frischhaltebehälters ein Unterdruck bzw. ein Teilvakuum erzeugt wird. Die Erzeugung dieses Unterdruckes geschieht in der Weise, dass der Deckel bei geöffnetem Be- und Entlüftungsventil auf das Unterteil aufgedrückt wird, wodurch Luft aus dem Innenraum entweichen kann. Wird in dieser zusammengepressten Stellung nun die Dichtkappe auf das Be- und Entlüftungsventil aufgesetzt und dieses somit verschlossen, entsteht durch die Aufgabe des Anpressdruckes auf den Deckel im Inneren des Behälters ein Teilvakuum, da sich der Deckel durch die Rückstellkräfte der umlaufenden Dichtung etwas vom Unterteil entfernt und somit das Gesamtvolumen des Behälters größer wird als im zusammengepressten Zustand. Entsprechend dieser Volumenvergrößerung findet im Inneren des Behälters eine Abnahme des zuvor vorhandenen atmosphärischen Druckes statt.

Soll der Frischhaltebehälter geöffnet werden, ist es äußerst zweckmäßig, vor dem Öffnen einen Druckausgleich herbeizuführen dadurch, dass das Be- und Entlüftungsventil vor Abnahme des Deckels geöffnet wird.

Dies geschieht bei den bislang bekannten Frischhaltebehältern der gattungsgemäßen Art in einem separaten Arbeitsgang, da bislang das Be- und Entlüftungsventil mit seiner Dichtkappe außerhalb des Griffbereiches angeordnet ist und somit die Betätigung der Griffe unabhängig ist von der Betätigung der Dichtkappe des Be- und Entlüftungsventiles und umgekehrt.

Die US-A-2004/0178202 offenbart einen Behälter mit einem Unterteil und einer Lasche, der ein verschließbares Be- und Entlüftungsventil aufweist. Das Ventil an der Lasche umfasst an einem Deckel einen Zapfen, der in eine Öffnung an dem Unterteil für eine Abdichtung einsteckbar und für eine Ventilöffnung herausziehbar ist.

Der vorliegenden Erfindung liegt die Aufgabe zugrunde, einen Frischhaltebehälter der gattungsgemäßen Art zu schaffen, der sich durch eine besonders einfache und praktische Handhabbarkeit auszeichnet.

Diese Aufgabe wird erfindungsgemäß durch einen Frischhaltebehälter mit den Merkmalen des Anspruches 1 gelöst.

Durch die erfindungsgemäße Konstruktion wird sichergestellt, dass der Deckel nur dann vom Unterteil gelöst werden kann, wenn dabei vorher das Be- und Entlüftungsventil geöffnet wurde und somit ein Druckausgleich im Inneren des Behälters stattgefunden hat.

Die entsprechenden Handhabungen sind nicht voneinander getrennt, so dass insoweit auch das Öffnen des Be- und Entlüftungsventiles vor Abnehmen des Deckels nicht vergessen werden kann.

Weitere Merkmale der Erfindung sind Gegenstand von Unteransprüchen.

Ein Ausführungsbeispiel der Erfindung ist in den beigefügten Zeichnungen dargestellt und wird im folgenden näher beschrieben.

Es zeigen:
- Figur 1: eine perspektivische Darstellung eines erfindungsgemäßen Frischhaltebehälters in geschlossener Stellung
- Figur 2: eine perspektivische Sprengbilddarstellung eines Griff-Bereiches des Frischhaltebehälters gemäß Figur 1

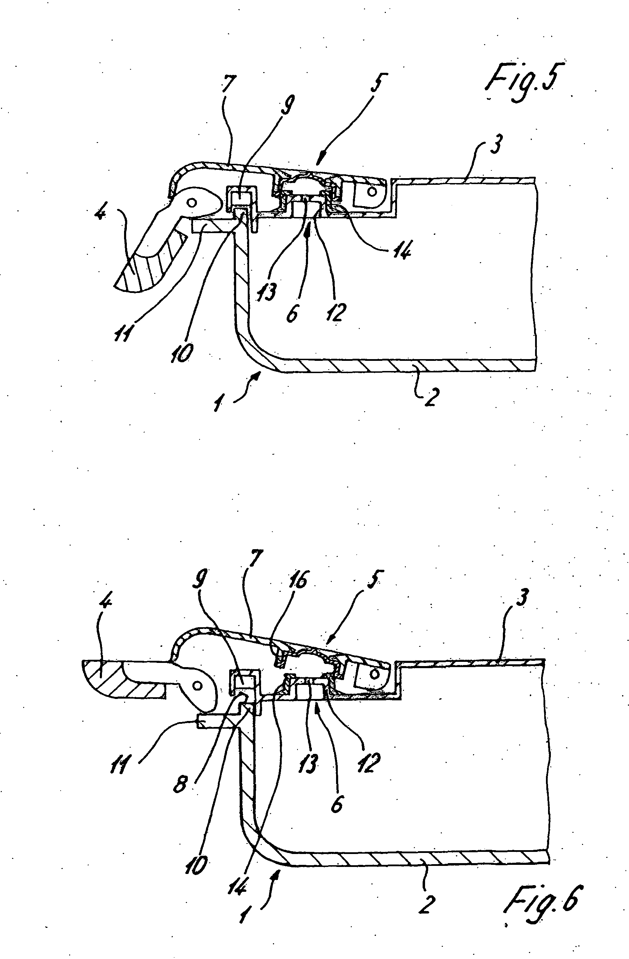

- Figuren 3 bis 6: Schnittdarstellungen durch den Griff- und Ventil-Bereich des Frischhaltebehälters in verschiedenen Öffnungs- oder Schließphasen des Griffes

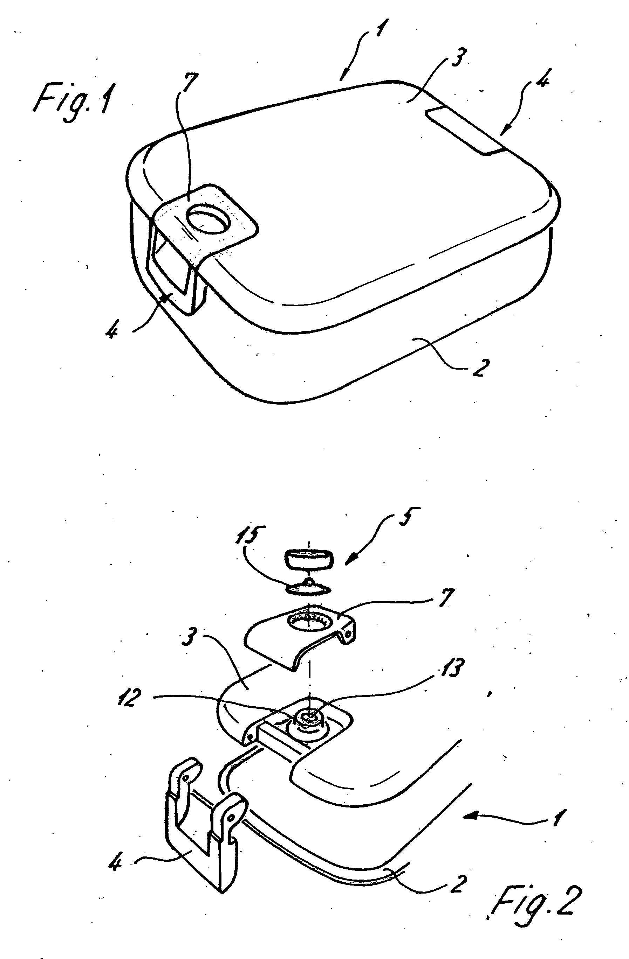

In Figur 1 ist mit dem Bezugszeichen 1 insgesamt ein Frischhaltebehälter bezeichnet, der in an sich bekannter Weise ein Unterteil 2 und einen Deckel 3 aufweist.

Der Deckel 3 ist mit zwei Griffen 4 ausgestattet, wobei die Griffe 4 an einander gegenüber liegenden Stirnseiten des im wesentlichen einen rechteckigen Grundriss aufweisenden Frischhaltebehälters 1 angeordnet sind.

Außerdem ist im Deckel 3 ein Be- und Entlüftungsventil 6 vorgesehen, welches durch eine Dichteinrichtung 5 abdichtbar bzw. verschließbar ist.

Das Be- und Entlüftungsventil 6 befindet sich erfindungsgemäß im Bereich eines Griffes 4 und die gesamte Anordnung ist so ausgelegt, dass das Be- und Entlüftungsventil 6 über einen mit dem Deckel 3 verbundenen und im Bereich des Griffes liegenden Hebel 7 zwangsweise geöffnet werden kann. Dabei ist die Anordnung so konzipiert, dass das Be- und Entlüftungsventil 6 in jedem Falle geöffnet ist, bevor der Deckel 3 vom Unterteil 2 gelöst werden kann.

Der Deckel 3 ist in seinem Randbereich mit einer umlaufenden Nut 8 versehen, innerhalb derer eine umlaufende Dichtung 9 angeordnet ist. Diese Dichtung 9 wird bei aufgesetztem Deckel durch die Griffe 4 auf den oberen Rand 10 des Unterteiles 2 aufgepresst. Dadurch ist der Deckel 3 umlaufend abdichtend mit dem Unterteil 2 verbunden.

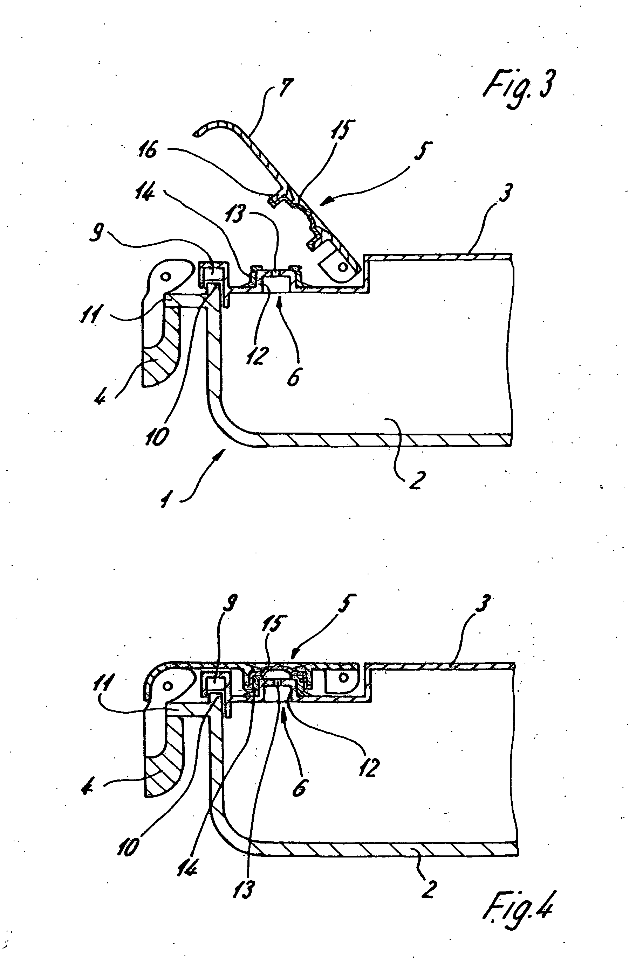

Dabei befinden sich die Griffe 4 in ihrer Schließstellung gemäß Figur 4, aus der erkennbar ist, dass die Griffe in dieser Schließstellung einen seitlichen Flansch 11 des Unterteiles untergreifen und durch Hebelwirkung den Deckel 3 nach unten, das heißt, in Richtung des Unterteiles 2 ziehen.

Das Be- und Entlüftungsventil 6 besteht aus einem an den Deckel 3 angeformten Stutzen 12 mit einer Be- und Entlüftungsbohrung 13. Der Stutzen 12 ist von einer Dichtmanschette 14 umgeben, die den Bereich der Be- und Entlüftungsbohrung 13 ausspart.

Die Dichteinrichtung 5 besteht aus einer Abdichtkappe 15, die in eine Aufnahme 16 des Hebels 7 eingesetzt ist und die abdichtend auf den Stutzen 12 mit der Dichtmanschette 14 geschwenkt werden kann. Diese Position ist ebenfalls aus Figur 4 ersichtlich. In dieser Situation wird ein im Inneren des Frischhaltebehälters 1 gegebener Unterdruck aufrecht erhalten. Der Unterdruck kann erzeugt werden dadurch, dass nach dem Aufsetzen des Deckels 3 auf das Unterteil 2 bei geöffnetem Be- und Entlüftungsventil 6 ein Druck auf den Deckel 3 ausgeübt wird. Dadurch werden die Dichtungen 9 weiter zusammengedrückt und der Deckel 3 nähert sich um einen bestimmten Betrag dem Boden des Unterteiles 2. Dadurch entweicht Luft aus dem Inneren des Frischhaltebehälters 1 durch das Be- und Entlüftungsventil 6 nach außen. Wird nun in dieser Position die Dichtkappe 15 auf das Be- und Entlüftungsventil 6 aufgesetzt, wird dieses letztlich verschlossen. Somit wird der sich beim Aufgeben des Druckes auf den Deckel 3 im Inneren des Frischhaltebehälters 1 ergebende Unterdruck gesichert. Der Unterdruck entsteht dadurch, dass nach der Aufhebung der Aufpresskräfte des Deckels auf das Unterteil 2 der Deckel 3 in einen gewissen Abstand zum Unterteil 2 wieder zurückgeführt wird, da dabei aber keine Luft in das Innere des Frischhaltebehälters 1 nachströmen kann, muss ein Teilvakuum entstehen.

Soll der Frischhaltebehälter 1 geöffnet werden, ist es sinnvoll, vor dem Öffnen einen Druckausgleich zwischen dem Inneren des Frischhaltebehälters 1 und der Umgebung herzustellen. Hierzu ist es lediglich erforderlich, die Abdichtkappe 15 vom Be- und Entlüftungsventil 6 abzunehmen. Dies erfolgt zwangsweise durch eine Verschwenkung des Hebels 7 in die aus Figur 3 ersichtliche Position, wobei diese Verschwenkung durchgeführt werden kann, ohne das der Griff 4 betätigt wurde, ebenso ist es aber möglich, diese Position durch Betätigung des Griffes zu erreichen.

In jedem Falle ist es so, dass das Be- und Entlüftungsventil 6 geöffnet ist, bevor der Deckel 3 vom Unterteil 2 abgenommen werden kann.

Es wurde schon darauf hingewiesen, dass der Frischhaltebehälter 1 einen etwa rechteckigen Grundriss aufweist. Dabei sind selbstverständlich die Ecken des Frischhaltebehälters 1 leicht abgerundet ausgeführt.

Bevorzugt ist eine Ausführungsform, bei der das Unterteil 2 in Richtung seines Bodens konisch ausgebildet ist. Dadurch besteht die Möglichkeit, mehrere Unterteile 2 von Frischhaltebehältern 1 ineinander zu stapeln.

Das Unterteil 2 und/oder der Deckel können beliebig aus Metall, Glas, Keramik, Kunststoff oder dergleichen hergestellt sein.

## Patentansprüche

1. Frischhaltebehälter (1) mit einem Unterteil (2) und mit einem Deckel (3), der mittels zweier Griffe (4) und einer umlaufenden Dichtung (9), welche auf den oberen Rand (10) des Unterteiles aufliegt, abdichtend mit dem Unterteil (2) verbunden ist, wobei der Deckel (3) mit einem Be- und Entlüftungsventil (6) versehen ist, welches durch eine Dichtkappe (15) verschließbar ist, wobei das Be- und Entlüftungsventil (6) im Bereich eines der Griffe (4) angeordnet ist und der betreffende Griff (4) mit einem Auslöser zum Abnehmen der Dichtkappe (15) vom Be- und Entlüftungsventil (6) versehen ist, durch welchen die Dichtkappe (15) zwangsweise vor dem Lösen des Griffes (4) abgenommen wird, **dadurch gekennzeichnet, dass** der Auslöser aus einem Hebel (7) besteht, der den am Deckel (3) angelenkten Griff (4) zumindest teilweise überdeckt und sowohl unabhängig von einer Griffbetätigung wie auch in Folge einer Griffbetätigung in eine das Be- und Entlüftungsventil (6) öffnende Schwenkstellung bewegbar ist.

2. Frischhaltebehälter nach Anspruch 1, **dadurch gekennzeichnet, dass** der Frischhaltebehälter (1) einen etwa rechteckigen Grundriss mit abgerundeten Ecken aufweist.

3. Frischhaltebehälter nach Anspruchs 2, **dadurch gekennzeichnet, dass** die Griffe (4) im Bereich der einander gegenüber liegenden Schmalseiten des Deckels (3) angeordnet sind.

4. Frischhaltebehälter nach einem der vorhergehenden Ansprüche, **dadurch gekennzeichnet, dass** das Unterteil (2) in Richtung seines Bodens hin konisch verjüngt ausgebildet ist.

5. Frischhaltebehälter nach einem der vorhergehenden Ansprüche, **dadurch gekennzeichnet, dass** am Deckel (3) eine umlaufende Nut (8) mit einer darin angeordneten Dichtung (9) vorgesehen ist, welche in Schließstellung auf den oberen Rand (10) des Unterteiles (2) aufgepresst ist.

6. Frischhaltebehälter nach einem der vorhergehenden Ansprüche, **dadurch gekennzeichnet, dass** das Unterteil (2) und/oder der Deckel (3) aus Metall, Glas, Keramik, Kunststoff oder dergleichen hergestellt sind.

7. Frischhaltebehälter nach einem der vorhergehenden Ansprüche, **dadurch gekennzeichnet, dass** das Be- und Entlüftungsventil (6) aus einem in den Deckel (3) integrierten Stutzen (12) mit einer Be- und Entlüftungsbohrung (13) besteht.

8. Frischhaltebehälter nach Anspruch 7 **dadurch gekennzeichnet, dass** die Abdichtkappe (15) in den Bereich des Hebels (7) integriert ist und abdichtend auf eine Dichtmanschette (14) des Stutzens (12) mit der Be- und Entlüftungsbohrung (13) aufpressbar ist.

9. Frischhaltebehälter nach einem der vorhergehenden Ansprüche, **dadurch gekennzeichnet, dass** die Abdichtkappe (15) in eine Aufnahme (16) des Hebels (7) eingesetzt ist.

10. Frischhaltebehälter nach einem der vorhergehenden Ansprüche, **dadurch gekennzeichnet, dass** die Abdichtkappe (15) aus einem flexiblen Material besteht.

## Claims

1. Air-tight container (1) with a lower part (2) and with a cover (3), which is sealingly connected with the lower part (2) by means of two handles (4) and an encircling seal (9) resting on the upper edge (10) of the lower part, wherein the cover (3) is provided with a venting and deaeration valve (6) closable by a sealing cap (15), wherein the venting and deaeration valve (6) is arranged in the region of one of the handles (4) and the relevant handle (4) is provided with a release for removing the sealing cap (15) from the venting and deaeration valve (6), by which the sealing cap (15) is constrainedly removed prior to releasing the handle (4), **characterised in that** the release consists of a lever (7) which at least partly covers the handle (4) articulated to the lid (3) and is movable not only in dependence on a handle actuation, but also as a consequence of a handle actuation into a pivot setting opening the venting and deaeration valve (6).

2. Air-tight container according to claim 1, **characterised in that** the air-tight container (1) has an approximately rectangular plan with rounded corners.

3. Air-tight container according to claim 2, **characterised in that** the handles (4) are arranged in the region of the mutually opposite narrow sides of the cover (3).

4. Air-tight container according to any one of the preceding claims, **characterised in that** the lower part (2) is constructed to be conically tapered in direction towards its base.

5. Air-tight container according to any one of the preceding claims, **characterised in that** an encircling groove (8) with a seal (9) arranged therein, which in closed setting is pressed onto the upper edge (10) of the lower part (2), is provided at the cover (3).

6. Air-tight container according to any one of the preceding claims, **characterised in that** the lower part (2) and/or the lid (3) is or are made of metal, glass, ceramic, plastic or the like.

7. Air-tight container according to any one of the preceding claims, **characterised in that** the venting and deaeration valve (6) consists of a stub pipe (12), which is integrated in the cover (3), with a venting and deaeration bore (13).

8. Air-tight container according to claim 7, **characterised in that** the sealing cap (15) is integrated in the region of the lever (7) and is sealingly pressable onto a sealing sleeve (14) of the stub pipe (12) with the venting and deaeration bore (13).

9. Air-tight container according to any one of the preceding claims, **characterised in that** the sealing cap (15) is inserted into a receptacle (16) of the lever (7).

10. Air-tight container according to any one of the preceding claims, **characterised in that** the sealing cap (15) consists of a flexible material.

## Revendications

1. °) Récipient de conservation (1) comprenant une partie inférieure (2) et un couvercle (3) muni de deux poignées (4) et d'un joint périphérique (9) appliqué sur le bord supérieur (10) de la partie inférieure en étant relié de manière étanche à la partie inférieure (2),
- le couvercle (3) étant muni d'une soupape d'équilibrage et de ventilation (6) fermé par un capuchon d'étanchéité (15),
- la soupape d'équilibrage et de ventilation (6) étant prévue au niveau de l'une des poignées (4) et cette poignée (4) est munie d'un organe de libération pour enlever le capuchon d'étanchéité (15) de la soupape d'équilibrage et de ventilation (6), le capuchon, l'étanchéité (15) étant enlevé de force avant la libération de la poignée (4),
**caractérisé en ce que**
l'organe de libération se compose d'un levier (7) qui chevauche au moins en partie la poignée (4) articulée au couvercle (3) et il est mobile à la fois indépendamment de la manoeuvre de la poignée et aussi comme conséquence de la manoeuvre de la poignée pour passer dans une position basculée ouvrant la soupape d'équilibrage et de ventilation (6).

2. °) Récipient de conservation selon la revendication 1,
**caractérisé en ce qu'**
il (1) a une forme de base, rectangulaire à coins arrondis.

3. °) Récipient de conservation selon la revendication 2,
**caractérisé en ce que**
les poignées (4) sont prévues sur les petits côtés opposés du couvercle (3).

4. °) Récipient de conservation selon l'une des revendications précédentes,
**caractérisé en ce que**
la partie inférieure (2) va en diminuant suivant une forme conique en direction de son fond.

5. °) Récipient de conservation selon l'une quelconque des revendications précédentes,
**caractérisé en ce que**
le couvercle (3) comporte une rainure périphérique (8) recevant le joint (9) et qui en position de fermeture est pressé sur le bord supérieur (10) de la partie inférieure (2).

6. °) Récipient de conservation selon l'une quelconque des revendications précédentes,
**caractérisé en ce que**
la partie inférieure (2) et/ou le couvercle (3) sont en métal, verre, matière céramique, matière plastique ou une matière analogue.

7. °) Récipient de conservation selon l'une quelconque des revendications précédentes,
**caractérisé en ce que**
la soupape d'équilibrage et de ventilation (6) se compose d'un embout (12) intégré au couvercle (3) et muni d'un perçage d'équilibrage et de ventilation (13).

8. °) Récipient de conservation selon la revendication 7,
**caractérisé en ce que**
le capuchon d'étanchéité (15) est intégré dans la zone du levier (7) et peut être appliqué sous pression contre un manchon d'étanchéité (14) de l'embout (12) muni du perçage d'équilibrage et de ventilation (13).

9. °) Récipient de conservation selon l'une quelconque des revendications précédentes,
**caractérisé en ce que**
le capuchon d'étanchéité (15) est situé dans un logement (16) du levier (7).

10. °) Récipient de conservation selon l'une quelconque des revendications précédentes,
**caractérisé en ce que**
le capuchon d'étanchéité (15) est en une matière souple.
